# EUROPEAN PATENT APPLICATION

(11) **EP 3 492 552 A1**
(43) Date of publication of application: **05.06.2019**
(21) Application number: 17001974.9
(22) Date of filing: 04.12.2017
(51) Int. Cl.: C09K 11/02, C09K 11/56, C09K 11/88

(54) **METHOD OF FABRICATING A BULK NANO-COMPOSITE**

(71) Applicant: Fachhochschule Münster, 48149 Münster (DE)
(72) Inventor: Zimdars, Julia, 48147 Münster (DE); Bredol, Michael, 48151 Münster (DE); Tofail, Syed, Limerick (IE)
(74) Representative: Cohausz Hannig Borkowski Wißgott

(57) **Abstract**

The invention relates to a method of fabricating a bulk nano-composite comprising nanoparticles, particularly inorganic nanoparticles, in a matrix of a polymer, particularly a matrix of an organic polymer, wherein nanoparticles and a polymer or a precursor of a polymer are mixed and the mixture compressed to a bulk material by plasma spark sintering, **characterized in that** the nanoparticles are provided as a colloid of a powder of nanoparticles in a dispersant.

## Description

The invention relates to a method of fabricating a bulk nano-composite comprising nanoparticles, particularly inorganic nanoparticles, in a matrix of a polymer, particularly a matrix of an organic polymer, wherein nanoparticles and a polymer or a precursor of a polymer are mixed and the mixture compressed to a bulk material by plasma spark sintering.

In general, such a method is known in the state of the art. For example the document "Enhanced thermoelectric performance of TiO2-based hybrid materials by incorporating conducting polymer" by Wu Zi-Hua et al. in Chin. Phys. B, Vol 24, No. 3 (2015) 034402 discloses to mix TiO₂-nanoparticles and nanoparticles of polyparaphenylene (PPP) by ball milling and afterwards plasma spark sintering the mixed powder. Sintering is performed at a temperature of 1173 K. Even though the document discloses successful fabrication of bulk material comprising TiO₂ in an amorphous matrix of polyparaphenylene it is expected that significant parts of the polymer are degenerated due to the high temperatures.

The document aims to improve the thermoelectric properties of the conducting polymer material by percolation of the nanoparticles. In this disclosure optical properties of the fabricated bulk material are of no interest.

It has been found that the process of aggregation of nanoparticles and phase separation in mixtures is a limiting factor if a homogeneous distribution of the nanoparticles in a matrix material is of importance. Accordingly, simple mixing of nanoparticles as mentioned in the document will not lead to a distribution of nanoparticles in the matrix that is sufficiently homogeneous, particularly for optical applications of the fabricated bulk material.

Accordingly it is an object of the invention to provide an improved method that leads to a more homogeneous distribution of the nanoparticles in the matrix material, particularly in order to use the fabricated bulk material in optical applications, for example solar cells.

According to the invention this object is solved by the method steps that the nanoparticles are provided as a colloid of a powder of nanoparticles in a dispersant.

Providing the nanoparticles that are to be mixed with a polymer in a colloidal state provides the advantage to avoid aggregation of the nanoparticles in the prepared colloid. This leads to a very homogeneous distribution of the nanoparticles in the colloid that remains after mixture with the polymer material.

According to a preferred embodiment of the invention the nanoparticles that are to be mixed with the polymer material have cross sectional sizes, particularly diameters, being less than 20nm, more preferred less than 10 nm. The polymer material needs not to be in a nanoparticular state, but of course that may be the case as well. The particular size or granular size of the polymer material may be preferably in the range of 1 to 100 micrometer. The particle size may be greater than 100 micrometer, particularly depending on the dimensions of the tools used. As mentioned, also the polymer may have particle sizes of less than 20 nm or less than 10 nm.

The polymer, particularly the organic polymer may be a non-conducting polymer. Furthermore preferred the polymer may be optically transparent, particularly in the specific wavelength region of interest in the specific application. For example the polymer and/or nanoparticles may be selected from a respective material being optically transparent, particularly clear in a bulky state, preferably in the wavelength range from 380 to 900 nanometers. Such a selection makes the fabricated bulky nanocomposite useful for optical applications in the visible range and near ultraviolet or near infrared.

An example of a suitable polymer is polycarbonate or polymethyl-methacrylate.

The nanoparticles to be mixed with the polymer may be selected in preference from a semiconducting and/or fluorescent material. The nanoparticles may be selected from a chalkogenide, preferably from anyone of the following: doped or non-doped zinc sulfide, zinc selenide, zinc telluride, copper indium sulfide, copper indium gallium sulfide, copper indium selenide, copper indium gallium selenide. Most preferred are nanoparticles, preferably the above-mentioned nanoparticles, carrying a passivating surface cap, for example a cap of doped or non-doped ZnS.

The colloid of the nanoparticles in a selected dispersant may the furthermore stabilized by additives, for example by means of surface ligands, for example mercaptopropionic acid or oleic acid or hexadecylamine, particularly depending on the nature of the nanoparticle surface as well as the dispersant selected.

Mixing the colloidal nanoparticles with the polymer prior to the sintering process may be performed in different ways.

A preferred step is that the polymer is provided by a precursor formed of the polymer dissolved in a solvent. Such a precursor may be preferably added to the colloid, specifically in this order. Colloidal nanoparticles and dissolved polymer may form respective liquid phases in this case.

According to another preferred step the polymer may be provided by solid pellets of the polymer material. Preferably the colloid of nanoparticles is added to the pellets, specifically in this order, preferably drop by drop. The solid pellets may have macroscopic size of 1 micrometer to 1 millimeter, particularly depending on the tools used in the further process.

In both preferred cases the mixture of the two components (nanoparticles and polymer) may be improved by stirring and/or shaking and/or the application of ultrasonic waves during and/or after adding the two components to each other.

In the method in which nanoparticles are dispersed in a dispersant and the polymer is dissolved in a solvent, the dispersant and the solvent may be the same chemical substance, meaning the same solvent is used for dissolving the polymer material and for dispersing the nanoparticles. This provides the advantage that any incompatibility between different substances for dispersing and dissolving are avoided.

Preferably, the solvent of the polymer and/or dispersant of the nanoparticles may be toluene or dioxane or any other solvent compatible both with the polymer and the nanoparticles.

The resulting mixture may be solidified and afterwards sintered by spark plasma sintering, particularly a process generally known in the state of the art.

For the invention Spark Plasma Sintering is preferably performed by compressing the mixture, typically in just one axial direction between two electrodes, particularly forming part of an hydraulic press. Power is applied to the electrodes and accordingly current flows through the set-up which results in intimate mixing between the mixture components and provides a compacted bulky material.

The mixture is preferably positioned in a graphite cylinder being closed on the opposite sides by graphite punches forming the respective electrodes. In addition the mixture may be wrapped in carbon paper prior to the sintering process, particularly the punches / electrodes sticking out of the wrapped paper.

In a preferred embodiment the mixture is solidified prior to sintering by drying the mixture in air. Particularly this is done if the mixture is prepared by adding the colloid of nanoparticles to polymer pellets drop by drop.

According to another possibility the mixture is solidified by cooling the mixture with/in liquid nitrogen. Such a method is even faster compared to the aforementioned one. This preferred method may the used for both mentioned kinds to prepare the mixture.

In general solidifying the mixture prior to sintering avoids any phase separation prior to sintering.

In a preferred improvement the parameters of sintering, preferably time, voltage or current are controlled to avoid a liquid phase of any of the parts in the mixture during sintering, preferably the polymer being at least in a mushy state and the nanoparticles being in a solid state.

Such a control may also avoid any phase separation during the process of sintering.

In a preferred embodiment the temperature of the mixture during sintering is controlled between the glass transition temperature and melting temperature of the polymer material in the mixture. Preferably, in any case the temperature may be controlled to be less than 500 °C, more preferred less than 400 °C, even more preferred less than 300 °C. This assures that there is no thermal degradation of the polymer in the sintered mixture.

Accordingly, avoiding a liquid phase in the mixture and any melt generation in the polymer part assures that the distribution of nanoparticles in the polymer that is achieved prior to the sintering in the mixture will remain during and after sintering.

In an even more preferred embodiment the method is improved by performing sintering in several steps, preferably at least 4 steps, by increasing in each successive step the temperature of the mixture above the temperature of the preceding step. Between the steps the mixture may rest without application of current or in each step the sintering parameters, particularly the temperature may be maintained constant for a predetermined certain time prior to proceeding with the next step. This assures a step by step introduction of the energy into the mixture and avoids any hot spots in the mixture. In preference, the time for which the temperature is maintained during a step is bigger in the first and last step compared to the intermediate steps.

In general, the temperature may be controlled by using a temperature sensor, particularly a thermocouple, that is attached to or better introduced into the cylinder of the press assembly of the spark sintering device into which the mixture is applied for sintering.

A characteristic curve between real temperature and measured temperature may be acquired in trials prior to the fabrication of a bulk nanocomposite. This may be done for example by using a temperature sensor additional to the temperature sensor at / in the mentioned cylinder, preferably the additional sensor being a thermocouple positioned directly in the mixture during sintering trials. Such an additional sensor will not be used any longer during the fabrication process and the sensor values of the used sensors will be corrected by the measured characteristic curve.

It is also possible to observe in trials the generation of melted polymer spots in the bulk material at a specific measured temperature that in that case obviously represents the real melting temperature of the polymer material really existing in the mixture. Such spots may be localized in the sintered bulk for example by cutting the bulk or by optical investigation. A threshold temperature selected with a certain distance to the measured temperature at which such melted spots occur will be the maximum temperature used in the method.

In any case it may be provided in the method that such a characteristic curve or threshold temperature is used to assure throughout the entire sintering process that the temperature generated in the mixture will not exceed the melting temperature of the used polymer in the mixture.

According to another improvement that may be combined with any of the mentioned embodiments the applied pressure between the punch electrodes during sintering may be selected to not exceed 40 MPa (Mega Pascal).

In the stepwise method mentioned before it may be provided that the applied pressure will be decreased from step to step starting with a maximum pressure in the beginning of all steps. Such maximum pressure may preferably not exceed the mentioned 40 MPa. This assures that in the beginning of sintering the neck formation can start between the particles but at the end, when the polymer gets more and more mushy the polymer particles will not be compressed to much and lose their sintered character.

Two preferred embodiments are described afterwards:

In both embodiments ZnS-capped Zinc Selenide nanoparticles are used since they are candidates for fluorescence conversion with their band gap lying in the near ultra violet of the electromagnetic spectrum. Accordingly, Zinc Selenide is suitable for improving the overall efficiency of solar cells.

ZnS-capped Zinc Selenide nanoparticles having an average size of 6 nm have been dispersed in toluene to form one of the compounds in the mixture. This kind of dispersion is used for both embodiments.

For both embodiments Polycarbonate, available for example as Tarflon R2200 from Idemitsu Kosan Co. Ltd. was chosen as a suitable polymer in view of its optical clarity.

According to a first embodiment the polycarbonate was dissolved in toluene to form a polymer precursor, this precursor being added to the dispersion of zinc selenide in toluene. The prepared mixture was shock frozen with liquid nitrogen.

According to a second embodiment the dispersion of zinc selenide in toluene was added drop by drop to pellets of polycarbonate and subsequently dried in air. Alternatively the mixture may be shock frozen using liquid nitrogen.

It was found that the second embodiment resulted in the best uniform distribution of the ZnS-capped ZnSe nanoparticles in the polymer matrix after sintering.

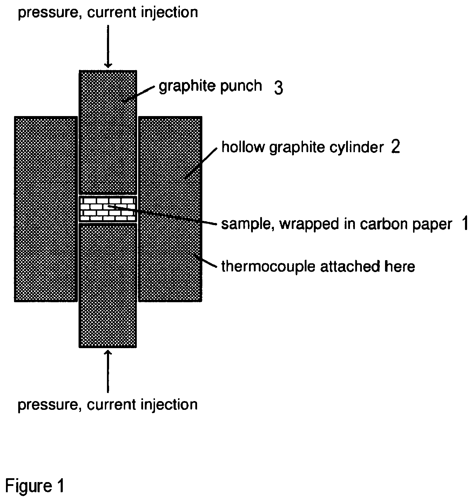

Sintering was in both embodiments performed by plasma spark sintering using a device shown in figure 1. The sample 1 of the mixture of ZnS-capped ZnSe nanoparticles and polymer according to the first and second embodiment was wrapped in carbon paper, placed in a hollow graphite cylinder 2 having graphite punches 3 in either open ends and contacting the mixture. Pressure is applied to the punches 3 for compacting the mixture, preferably the pressure being less than 40 MPa.

A pulsed voltage, for example 20 V is applied to the punches, resulting in a high pulsed current through the set-up. The peak current may be up to 1500 Amperes.

The compressed mixture is sintered by application of these high currents wherein the sintering parameters, for example heating rate and/or temperature and/or duration, is controlled so that the temperature in the compressed mixture does not exceed the melting temperature of the used polymer.

In both embodiments the net weight fraction of the ZnS-capped ZnSe-nanoparticles in the polycarbonate was 25%. In general, it may be provided that the fraction of nanoparticles in the polymer is less than 50%, preferably less than 30 %.

Furthermore, in both embodiments the sintering was performed in several successive steps. In a first step the sintering parameters were chosen so that the temperature registered by the thermocouple did not exceed 90 °C. This temperature was maintained for 7 minutes. In a second step the parameters were chosen so that the temperature rose to 95 °C. This temperature was maintained for 3 minutes. In a third step the parameters were chosen to achieve a temperature of 105 °C that was maintained for 2 minutes in this step. In a forth step the temperature was increased to 159 °C and maintained for 3 minutes. In the last step the temperature was just slightly increased to 160 °C and maintained for 5 minutes. Afterwards the fabricated bulky nanocompound was cooled down.

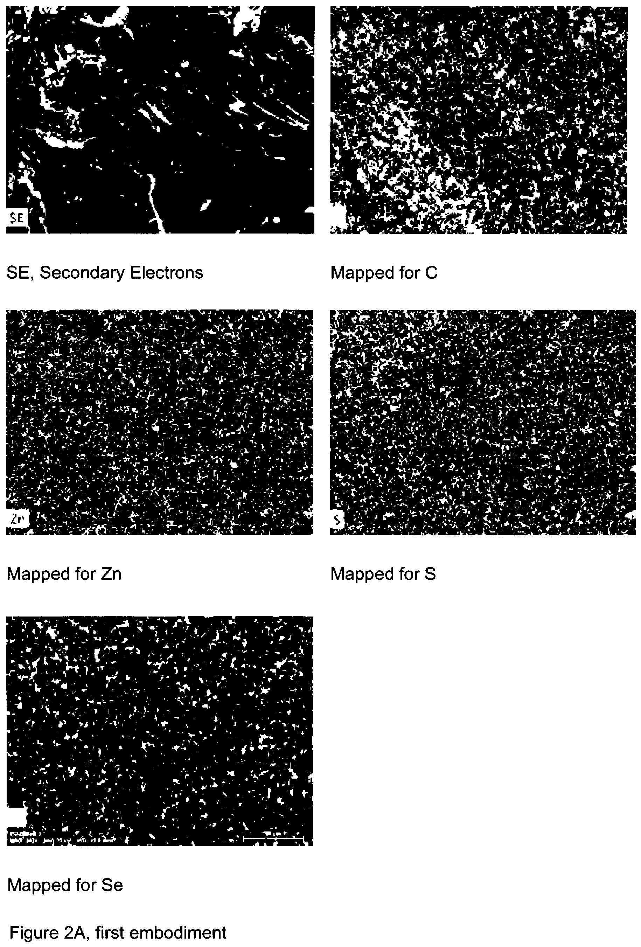

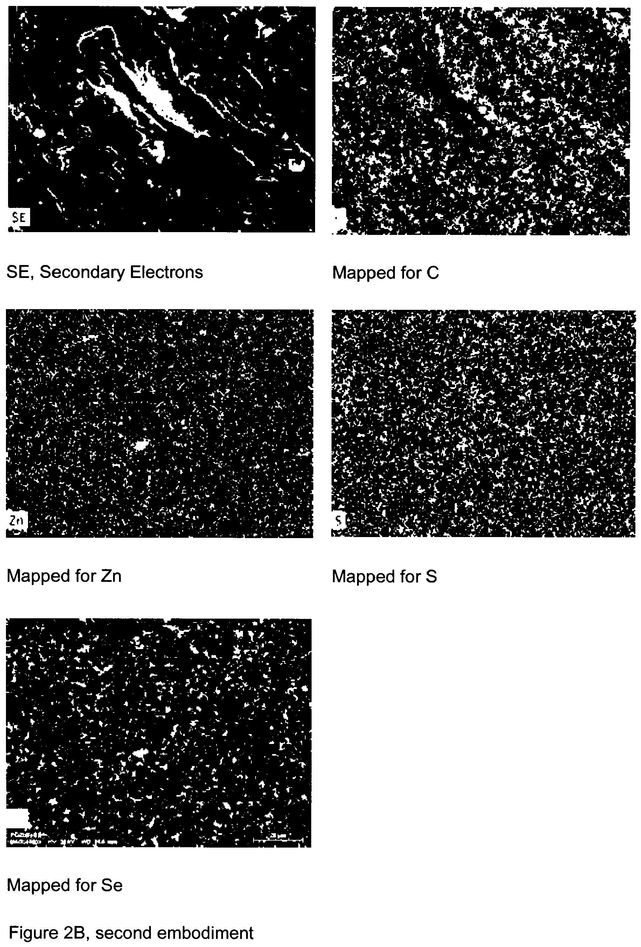

The images of a scanning electron microscope in figures 2A and 2B represent the two different embodiments and prove that a very uniform distribution of the ZnS-capped ZnSe nanoparticles in the polymer matrix is achieved.

The original grey-scale pictures have been processed to black and white by the application of a threshold value on the original grey scale (using ca. 90% of the relevant peak in the histogram), to the effect that the presence of bright spots indicates the presence of the respective signal with high probability. The two Figures 2A and 2B represent two different results achieved by the different methods to mix the nanoparticles and the polymer.

In both figures the top left picture, marked "SE" for secondary electrons, shows the typical irregular surface morphology of a fractured piece of the sintered solid. Mapping these surfaces by Energy Dispersive X-ray Analysis (EDX) for the presence of carbon (top right picture), zinc (middle left picture), sulfur (middle right picture) and selenium (bottom picture) shows in all cases a completely uniform pattern in which each bright spot represents a signal from the respective chemical element.

In general, since the effective temperature in the sintering mixture may reach peak values well above the average temperature measured by the thermocouple in the graphite cylinder, care needs to be taken to keep the peak temperatures below the melting temperature.

Polycarbonates like the polymer used in the embodiment have a glass temperature of ca. 150 °C and a melting temperature of ca. 220 °C, thus a useful temperature interval of ca. 70 °C for sintering in the "mushy" state (if not known, these data can be measured by standard techniques, e.g. DSC).

The temperature curve used in the embodiment is employing this range of 70 °C, but preferably with an offset of ca. -50 °C, due to the uncertainties described above.

No signs of melting could be seen in the final nanocomposite, so the effective peak temperatures in the sintering mixture obviously could be kept below the melting temperature, whereas the glass temperature was passed even nominally.

Due to different sizes and volumes of the graphite cylinders available and the mixture applied, the necessary offset has to be determined in test runs; the same applies for the sequence and magnitude of electrical pulses or other parameters used during spark plasma sintering.

## Claims

1. Method of fabricating a bulk nano-composite comprising nanoparticles, particularly inorganic nanoparticles, in a matrix of a polymer, particularly a matrix of an organic polymer, wherein nanoparticles and a polymer or a precursor of a polymer are mixed and the mixture compressed to a bulk material by plasma spark sintering, **characterized in that** the nanoparticles are provided as a colloid of a powder of nanoparticles in a dispersant.

2. Method according to claim 1, **characterized in that** the polymer is provided by a precursor formed of the polymer dissolved in a solvent, particularly the precursor being added to the colloid.

3. Method according to claim 1, **characterized in that** the polymer is provided by solid pellets of the polymer material, particularly the colloid being added to the pellets, preferably drop by drop.

4. Method according to anyone of the preceding claims, **characterized in that** the mixture is solidified prior to the spark plasma sintering by:
a. drying the mixture in air
b. cooling the mixture with/in liquid nitrogen

5. Method according to anyone of the preceding claims, **characterized in that** the parameters of sintering, preferably time, voltage or current are controlled to avoid a liquid phase of any of the parts in the mixture during sintering, preferably the polymer being in a mushy state and the nanoparticles being in a solid state.

6. Method according to anyone of the preceding claims, **characterized in that** the temperature of the mixture during sintering is controlled between the glass transition temperature and melting temperature of the polymer material in the mixture, preferably in any case the temperature being less than 500 °C, more preferred being less than 400 °C.

7. Method according to anyone of the preceding claims, **characterized in that** sintering is performed in several steps, preferably at least 4 steps, by increasing in each successive step the temperature of the mixture above the temperature of the preceding step and maintaining the sintering parameters, particularly the temperature in each step for a predetermined certain time prior to proceding with the next step.

8. Method according to anyone of the preceding claims, **characterized in that** the nanoparticles are selected from a semiconducting and/or fluorescent material.

9. Method according to anyone of the preceding claims, **characterized in that** the nanoparticles are selected from a chalkogenide, preferably from anyone of the following: doped or non-doped zinc sulfide, zinc selenide, zinc telluride, copper indium sulfide, copper indium gallium sulfide, copper indium selenide, copper indium gallium selenide, including nanoparticles carrying a passivating surface cap, particularly ZnS.

10. Method according to anyone of the preceding claims, **characterized in that** the nanoparticles and/or polymer are selected from a respective material being optically transparent, particularly clear in a bulky state, preferably in the wavelength range from 380 to 900 nanometers.

11. Method according to anyone of the preceding claims, **characterized in that** the polymer is selected to be polycarbonate or polymethyl-methacrylate.

12. Method according to anyone of the preceding claims, **characterized in that** the same solvent is used for dissolving the polymer material and for dispersing the nanoparticles.

13. Method according to anyone of the preceding claims, **characterized in that** the solvent of the polymer and/or dispersant of the nanoparticles is toluene or dioxane or any other solvent compatible both with the polymer and the nanoparticles.
